# EUROPEAN PATENT SPECIFICATION

(11) **EP 2 868 192 B1**
(45) Date of publication and mention of the grant of the patent: **13.12.2017**
(21) Application number: 13812953.1
(22) Date of filing: 17.06.2013
(51) Int. Cl.: A01K 1/015

(54) **ANIMAL LITTER**
TIERSTREU
LITIÈRE POUR ANIMAL

(30) Priority: 02.07.2012 JP 2012148952
(43) Date of publication of application: 06.05.2015
(73) Proprietor: Unicharm Corporation, Ehime 799-0111 (JP)
(72) Inventor: HIROSHIMA, Kenji, Kanonji-shi Kagawa 769-1602 (JP); SOGOU, Tatsuya, Kanonji-shi Kagawa 769-1602 (JP); HIRAO, Tomoko, Kanonji-shi Kagawa 769-1602 (JP); KANEKO, Shinya, Kanonji-shi Kagawa 769-1602 (JP); YAMADA, Hidekazu, Fujieda-shi Shizuoka 426-0003 (JP); OTOMO, Takahiro, Fujieda-shi Shizuoka 426-0003 (JP)
(74) Representative: Dolleymores
(86) International application number: PCT/JP2013/066620
(87) International publication number: WO 2014/007053

(56) References cited:
- WO-A2-2005/103714
- JP-A- H05 223 812
- JP-A- 2006 246 903
- JP-A- 2009 044 992
- JP-A- 2011 147 382
- JP-A- 2012 055 241
- JP-U- 3 125 019
- US-A1- 2004 025 798

## Description

### TECHNICAL FIELD

The present invention relates to animal toilet sand.

### BACKGROUND ART

Animal toilet sand that changes color upon absorption of moisture such as urine has been proposed heretofore in order to facilitate recognition of a urinated area (for example, refer to Patent Document 1).

The animal toilet sand proposed in Patent Document 1 is provided with a stained core portion and a covering layer that covers the core portion to mask the color of the core portion. In the animal toilet sand, the color of the core portion comes out when the covering layer absorbs moisture.

Patent Document 1: Japanese Unexamined Patent Application Publication No. 8-182437

Further prior art arrangements are known from JP2012 55241 and WO2005 103714.DISCLOSURE OF THE INVENTION Problems to be Solved by the Invention

Animal toilet sand impregnated with a fragrance for suppressing the odor of excreted urine has also been proposed. Here, in a case of impregnating animal toilet sand with a fragrance, a fragrance dissolved in a liquid such as an organic solvent is sprayed onto the surface of the animal toilet sand in order to improve a scent releasing effect. However, in a case in which the liquid in which the fragrance is dissolved is sprayed onto the above described animal toilet sand that changes color upon absorption of moisture, the animal toilet sand changes color due to the sprayed liquid.

Furthermore, as a method of easily checking the physical condition of an animal, visual observation of the color of the urine is carried out. The visual observation of the color of the urine is made possible by using white animal toilet sand.

However, in a case of using the animal toilet sand that changes color upon absorption of moisture, the animal toilet sand that has absorbed moisture changes color itself, and it has therefore been difficult to observe the color of the urine absorbed by the animal toilet sand.

Given this, the present invention is aimed at providing animal toilet sand that allows easy recognition of an area where urine has been absorbed, easy observation of the color of the urine, and suppression of the odor of excreted urine.

### Means for Solving the Problems

The present invention relates to an animal toilet sand as recited by Claim 1.

In addition, it is preferable that the color change particles are provided with a stained core portion which is stained in a predetermined color, and a covering layer which is configured to include pulp and highly absorbent resin and to cover the stained core portion and mask the color of the stained core portion; and the color of the stained core portion comes out when the covering layer absorbs moisture.

It is preferable that the stained core portion includes waste material of absorbent articles and the color of the stained core portion is darker than the color of the waste material.

It is preferable that the stained core portion is stained in a cold color.

It is preferable that the color change particles are provided with a core portion which is configured to include pulp and a covering layer which is configured to include a predetermined pigment or dye and to cover the core portion; and the color of the pigment or dye included in the covering layer comes out when the covering layer absorbs moisture.

In addition, it is preferable that the covering layer of the color change particles is stained in a cold color.

It is preferable that the color change particles are white particulate in a state where moisture is not absorbed.

It is preferable that the particulates include a deodorant.

It is preferable that the particulates include a surfactant.

It is preferable that the proportion of pulp included in the covering layer is greater than the proportion of pulp included in the core portion and the stained core portion.

### Effects of the Invention

With the animal toilet sand of the present invention, an area where urine has been absorbed can be easily recognized, the color of urine can be easily observed, and the odor of excreted urine can be suppressed.

### PREFERRED MODE FOR CARRYING OUT THE INVENTION

A preferred embodiment of the animal toilet sand of the present invention is described hereinafter.

The animal toilet sand of the present invention is constituted of a plurality of particulates composed mainly of pulp and has a water absorbing property.

In the present invention, the plurality of particulates includes color change particles and white particles.

The color change particles are particulates that change color upon absorption of moisture. In the present embodiment, the color change particles are provided with a stained core portion and a covering portion.

The stained core portion is stained in a predetermined color. The stained core portion is formed by spraying water soluble dye dissolved in water onto a surface of a particulate composed mainly of powdery or short fibrous pulp. It should be noted that the particulate that constitutes the stained core portion is formed by granulating a material composed mainly of the powdery or short fibrous pulp, for example, by an extrusion granulator.

As the material for the stained core portion, it is possible to use a pulverized waste material of absorbent articles that include pulp such as disposable diapers and sanitary napkins. In a case of using the waste material of absorbent articles as the material for the stained core portion, the stained core portion includes, in addition to pulp, foreign matter such as highly absorbent resin, back sheet fragments, and rubber fragments, which constitute the absorbent articles. The content of the foreign matter in the stained core portion is preferably no greater than 10% of weight of the stained core portion, from the viewpoint of maintaining a preferable water absorbing property of the stained core portion and avoiding impairment of appearance of the animal toilet sand.

It is preferable that the stained core portion is stained in a cold color such as blue and green. In a case of using waste material of absorbent articles as the material for the stained core portion, a light colored sheet material such as a back sheet and rubber are mixed into the stained core portion. Therefore, it is preferable that the color of the stained core portion is darker than the color of the waste material. As a result, even in a case of manufacturing the animal toilet sand using waste material of absorbent articles, the appearance of the color change particles is not impaired.

The stained core portion can include other materials in addition to pulp. The other materials, for example, may be a surfactant or a deodorant.

As the surfactant, an anionic surfactant, a cationic surfactant, an amphoteric surfactant, or a nonionic surfactant can be used. By using these surfactants, affinity between the stained core portion and urine can be improved and water absorption rate can be increased.

As the deodorant, a neutralizing substance such as citric acid or sodium bicarbonate, and an antimicrobial agent may be cited.

As the antimicrobial agent, organic, inorganic metal, photocatalytic, and natural antimicrobial agents can be used; however, an organic surfactant type antimicrobial agent is preferably used. By employing these antimicrobial agents, propagation of bacteria can be suppressed.

The content of the other materials in the stained core portion is preferably not greater than 30%, and more preferably not greater than 20%, from the viewpoint of maintaining a preferable water absorption property.

The covering layer covers the stained core portion and masks the color of the stained core portion. The covering layer is configured to include highly absorbent resin. More specifically, the covering layer is preferably configured to include a highly absorbent resin, powdery pulp, and other materials. The covering layer is formed by sprinkling powder, which is a mixture of the highly absorbent resin, the pulp, and the other materials, onto the stained core portion that contains moisture and has a wet surface.

As the highly absorbent resin, a resin such as polyacrylic polymer or starch-acrylic acid polymer can be used.

As the starch, for example, tapioca starch or corn starch can be used. The starch improves stickiness of the particulates when urine is absorbed.

The same surfactant and antimicrobial agent as those used in the stained core portion can be used.

The content of the highly absorbent resin in the covering layer is preferably 1% to 20%, and more preferably 4% to 15% from the viewpoint of allowing the particulates to exhibit a solidifying property upon absorption of urine and to prevent inhibition of a water absorbing property of the core portion by swelling and gelation of the highly absorbent resin.

Powdered pulp is used for drawing urine toward the stained core portion and for masking the color of the stained core portion. The content of the pulp in the covering layer is preferably at least 30%, and more preferably at least 35%, from the viewpoint of improving a urine-drawing property.

The other materials constituting the covering layer, for example, may include starch, a surfactant or an antimicrobial agent.

In the above described color change particles, the highly absorbent resin constituting the covering layer gelates upon absorption of moisture, and the dye included in the stained core portion seeps into the covering layer. As a result, the color of the stained core portion comes out and the color change particles undergo a color change.

Alternatively, the color change particles which are provided with a non-stained core portion and a covering layer which is configured to include a predetermined pigment or dye can also be used. In this case, the color of the pigment or dye included in the covering layer comes out when the covering layer absorbs moisture.

More specifically, in a case of configuring the covering layer including a pigment, when the color change particles absorb moisture, the highly absorbent resin included in the covering layer gelates and becomes transparent, thereby showing the color of the pigment. In addition, in a case of configuring the covering layer including a dye, when the color change particles absorb moisture, the dye included in the covering layer dissolves and diffuses, thereby showing the color of the dye.

The white particles are a white particulate which does not change color upon absorption of moisture. The white particles are provided with a core portion and a covering portion.

Here, the white particles indicate a particulate with a whiteness level such that, when the color of animal urine transfers thereto, the color of urine can be recognized.

The core portion is composed mainly of powdery or short fibrous pulp, and is formed by granulating a material composed mainly of the powdery or short fibrous pulp, for example, by an extrusion granulator. In the present embodiment, except for the dye not being sprayed, the core portion is produced from the same material and by the same method as the stained core portion.

The covering layer of the white particles further includes a fragrance, in addition to the materials constituting the covering layer of the color change particles. Alcohols such as geraniol, citronellol, citral, eugenol, phenethyl alcohol, thymol, linalool, leaf alcohol, menthol, benzyl alcohol, for example, and aldehydes such as hexylcinnamaldehyde, for example, are preferably used as the fragrance.

The covering layer is impregnated with the above described fragrance in the following procedure.

Powder, which is a mixture of the highly absorbent resin, the pulp and other materials, is first sprinkled onto the core portion that contains moisture and has a wet surface, and then the core portion with the powder sprinkled thereonto is dried.

Thereafter, the fragrance in a state of being dissolved in organic solvent is sprayed onto the dried core portion. In the present embodiment, the core portion and the covering layer of the white particles are both composed of a material which is white. As a result, the white state is maintained even when the white particles absorb moisture. In addition, in a state in which the white particles have absorbed animal urine, if the animal urine is colored yellow or orange, the color of urine transfers to the white particles and can be visually recognized.

The animal toilet sand of the present invention is configured such that the color change particles are blended at a higher ratio by weight than the white particles.

With the above described animal toilet sand according to the present embodiment, when excreted urine is absorbed by the particulates (color change particles and white particles), the highly absorbent resin included in the covering layer swells and sticks to adjacent particulates, to thereby form an aggregate.

Here, the animal toilet sand according to the present embodiment was configured to include the color change particles and the white particles, and the white particles which do not change color were impregnated with a fragrance. Since the white particles do not change color even if the fragrance dissolved in liquid is sprayed thereonto, by configuring the animal toilet sand by blending the white particles with the fragrance sprayed thereonto and the color change particles that change color upon absorption of moisture, it is possible to realize the animal toilet sand that can suppress the odor of urine by the scent and that allows easy recognition of an area where the urine has been absorbed. In addition, in a case in which excreted urine is absorbed by the white particles, the color of urine transfers to the white particles and can be easily recognized. Furthermore, since the white particles do not change color even if the fragrance is sprayed thereonto, it is possible to improve freedom of choice regarding the fragrance with which the white particles can be impregnated. Moreover, since the white particles, towards which a user tends to bring his face closer in order to check the color of urine, are impregnated with the fragrance, adverse effects due to the odor of the urine can further be suppressed.

Meanwhile, the color change particles were configured to include the stained core portion and the covering layer, to allow the color of the stained core portion to come out upon absorption of moisture. As a result, the animal toilet sand that allows easy recognition of an area where urine has been absorbed can be realized without using a chemical agent that produces color upon absorption of urine.

Animal urine tends to be colored yellow or orange when the animal is in bad health. Given this, the stained core portion was configured by staining in a cold color. As a result, the color change particles change color to the cold color upon absorption of urine, allowing easier recognition of a colored state of the white particles to which the color of urine has transferred.

The color change particles and the white particles are formed in a grain size of at least 3 mm and no greater than 8 mm. A proportion of the white particles to all the particulates is 0.5% to 5% in ratio by weight.

The animal toilet sand of the present embodiment is used mainly for cats. The amount of urine excreted by a cat at one time is approximately 20 ml. Here, in a case in which the grain size of the particulates is 3 mm to 8 mm, the number of particulates used for absorbing 20 ml of urine is 300 to 500. Given this, by setting the grain size of the color change particles and the white particles to at least 3 mm and no greater than 8 mm, and the proportion of the white particles to all the particulates to at least 0.5%, a plurality of white particles can be included in the particulates that absorb urine excreted at one time. This enables confirmation of the color of urine to be performed more assuredly. In addition, by setting the proportion of the white particles to all the particulates to be no greater than 5%, the area where urine has been absorbed can be prevented from being patchy and ease of recognition of the areas can be maintained.

In the present specification, particulates that pass through a sieve of 8 mm mesh and do not pass through a sieve of 3 mm mesh are regarded as particulates of at least 3 mm and less than 8 mm in grain size.

Furthermore, in the animal toilet sand, the proportion of particulates of at least 3 mm and less than 8 mm in grain size with respect to all the particulates is preferably at least 90% and more preferably at least 95% in ratio by weight. By setting the proportion of the particulates of at least 3 mm and less than 8 mm in grain size with respect to all the particulates, to be at least 90%, scattering due to the presence of particulates smaller in grain size can be prevented.

It should be noted that particulates other than those of at least 3 mm and less than 8 mm in grain size may be particulates in which those of at least 3 mm and less than 8 mm in grain size are broken.

In addition, it is preferable that the color change particles are a white particulate in a state where moisture has not been absorbed. As a result, the animal toilet sand (color change particles and white particles) before use can be composed only of particulates which are white, so as to give an impression of cleanliness and improve the product image of the animal toilet sand.

In addition, it is preferable that the color change particles and the white particles are configured in a similar shape. As a result, the animal toilet sand can be composed of a plurality of particulates of a similar shape, and appearance of the animal toilet sand can be improved. The shape of the color change particles and the white particles may, for example, be a cylindrical shape, a disk shape or a spherical shape.

In addition, it is preferable, in the color change particles, that the proportion of pulp included in the covering layer is greater than the proportion of pulp included in the core portion; and in the white particles, the proportion of pulp included in the covering layer is greater than the proportion of pulp included in the stained core portion. As a result, a liquid drawing property in the covering layer can be improved, and excreted urine can be quickly drawn to the core portion or the stained core portion. In addition, in a case of producing the core portion or the stained core portion by using waste material of absorbent articles, it is possible to prevent easy visual recognition of the sheet material or rubber included in the core portion or the stained core portion. Furthermore, the color of the stained core portion of the color change particles that absorb urine can be made easily recognizable.

### EXAMPLES

The present invention is described in further detail hereinafter with reference to examples. However, the scope of the present invention is not limited to the examples.

### Manufacture of Particulate Matter

Raw material including a highly absorbent resin, composed mainly of pulp, being extracted from waste material in the manufacture of disposable diapers, was pulverized to have a grain size of ϕ5 mm to ϕ15 mm and water was added thereto such that a granulation moisture percentage was 10% to 40%.

After mixing, the mixture was granulated by using an extrusion granulator. Here, the mixture that was extruded through a screen was cut at intervals of 4 mm, thereby obtaining the core portion and base material for the stained core portion.

The stained core portion was then obtained by spraying water soluble dye onto the base material for the stained core portion thus obtained.

Thereafter, the covering layer was formed by sprinkling powder, which is a mixture of 55% to 90% of the pulverized pulp, 5% to 40% of the highly absorbent resin, and 5% to 40% of starch, onto the surface of the core portion and the obtained stained core portion, thereby obtaining the color change particles and base material for the white particles. Next, the color change particles and the base material for the white particles were dried by a drier such that the moisture percentage is no greater than 10%.

The white particles were then obtained by spraying a fragrance dissolved in organic solvent onto the surface of the base material of the white particles thus obtained.

Thereafter, the color change particles and white particles thus obtained were sifted through a sieve of 4 mm mesh, and particulates that passed through the sieve of 4 mm mesh were removed.

The color change particles and the white particles obtained were mixed in the proportions shown in Table 1 below, to obtain the animal toilet sands of Examples 1 and 2 and Comparative Examples 1 to 7.

The color change particles and the white particles obtained were particulates that passed through a sieve of 8 mm mesh and did not pass through a sieve of 3 mm mesh.

For the animal toilet sands of Examples 1 and 2 and Comparative Examples 1 to 7, ease of confirmation of urine color and visual recognition property of aggregate were assessed. The results are shown in Table 1.

### Assessment of Ease of Confirmation of Urine Color

The animal toilet sands of Examples 1 and 2 and Comparative Examples 1 to 7 are each contained in beakers to a depth of at least 10 cm.

Next, 20 ml of a normal saline solution (0.9% NaCl aq) with yellow dye are added as artificial urine in drops for 10 seconds to the beakers with the animal toilet sands, from a position of 3 cm above the upper surface of the animal toilet sand.

10 minutes after addition of the artificial urine, ease of identification of the yellow color of the artificial urine in an aggregate obtained was assessed.

The assessment was made by 10 cat owners, and ease of identification of the yellow color in the aggregate was assessed as follows: a "double circle" is shown for a case in which 8 to 10 cat owners easily identify the yellow color in the aggregate; a "circle" for a case in which 4 to 7 cat owners easily identify the yellow color in the aggregate; and an "x" for a case in which 0 to 3 cat owners easily identify the yellow color in the aggregate.

### Assessment of Visual Recognition Property of Aggregate

The animal toilet sands of Examples 1 and 2 and Comparative Examples 1 to 7 are each contained in beakers to a depth of at least 10 cm.

Next, 20 ml of a normal saline solution (0.9% NaCl aq) are added as artificial urine in drops for 10 seconds to the beakers with the animal toilet sands, from a position of 3 cm above the upper surface of the animal toilet sand.

10 minutes after addition of the artificial urine, ease of visual recognition of the aggregate obtained was assessed.

Compared to an aggregate obtained in the Comparative Example, ease of visual recognition of the aggregate obtained in other Examples and Comparative Examples was assessed.

The assessment was made by 10 cat owners, and ease of recognition of the yellow color in the aggregate was assessed as follows: a "double circle" is shown for a case in which 8 to 10 cat owners recognize the aggregate as easily as the aggregate obtained in Comparative Example 1; a "circle" for a case in which 4 to 7 cat owners recognize the aggregate as easily as the aggregate obtained in Comparative Example 1; and an "x" for a case in which 0 to 3 cat owners recognize the aggregate as easily as the aggregate obtained in Comparative Example 1.

**[Table 1]**

| | Proportion of White Particles Blended | Ease of Confirmation of Urine Colour | | Visual Recognition Property of Aggregate | |
|---|---|---|---|---|---|
| | % | Number of People | Assessment | Number of People | Assessment |
| Comparative Example 1 | 0.0% | 0 | Δ | - | - |
| Comparative Example 2 | 0.1% | 3 | Δ | 9 | ⊚ |
| Example 1 | 0.5% | 4 | ○ | 8 | ⊚ |
| Example 2 | 5% | 7 | ○ | 8 | ⊚ |
| Comparative Example 3 | 10% | 9 | ⊚ | 6 | ○ |
| Comparative Example 4 | 20% | 10 | ⊚ | 5 | ○ |
| Comparative Example 5 | 30% | 10 | ⊚ | 4 | ○ |
| Comparative Example 6 | 35% | 10 | ⊚ | 2 | Δ |
| Comparative Example 7 | 55% | 10 | ⊚ | 1 | Δ |

As shown in Table 1, it has been shown that the animal toilet sands of Examples 1 and 2 in which the proportion of the white particles blended is at least 0.5% and no greater than 5% in ratio by weight, provide sufficient ease of confirmation of the urine color, while having a high visual recognition property of aggregate.
therefore been shown that the visual recognition property of the aggregate is high. On the other hand, it has been shown that the animal toilet sands of Example 7 and Comparative Example 2 in which the proportion of the white particles blended is at least 35% have poor ratings.

From the above described results, it has been shown that the animal toilet sands of Examples 2 to 6, in which the proportion of the white particles blended is at least 0.5% and no greater than 30% in ratio by weight, allow easy confirmation of the urine color and have high a visual recognition property of aggregate. Among these, it has been shown that the animal toilet sands of Examples 2 and 3, in which the proportion of the white particles blended is at least 0.5% and no greater than 5% in ratio by weight, provides sufficient ease of confirmation of the urine color, while having a high visual recognition property of aggregate.

## Claims

1. An animal toilet sand composed of a plurality of particulates having a water absorbing property,
wherein the particulates include: color change particles that are configured to include pulp and to change color upon absorbing moisture; and
white particles that have a core portion which is configured to include pulp and a covering layer which is configured to include pulp, highly absorbent resin and fragrance, and to cover the core portion, the white particles not changing color upon absorbing moisture,
**characterised in that** the color change particles are included at a higher ratio by weight than the white particles, and
wherein a grain size of the color change particles and the white particles is at least 3 mm and no greater than 8 mm, and the proportion of the white particles to all the particulates is 0.5% to 5% in ratio by weight.

2. The animal toilet sand according to claim 1, wherein: the color change particles are provided with a stained core portion which is stained in a predetermined color, and a covering layer which is configured to include pulp and highly absorbent resin and to cover the stained core portion and mask the color of the stained core portion; and
the color of the stained core portion comes out when the covering layer of the color change particles absorbs moisture.

3. The animal toilet sand according to claim 2, wherein the stained core portion includes waste material of absorbent articles and the color of the stained core portion is darker than the color of the waste material.

4. The animal toilet sand according to claim 2 or 3, wherein the stained core portion is stained blue or green.

5. The animal toilet sand according to claim 1, wherein: the color change particles are provided with a core portion which is configured to include pulp, and a covering layer which is configured to include a predetermined pigment or dye and to cover the core portion of the color change particles; and
the color of the pigment or dye included in the covering layer comes out when the covering layer of the color change particles absorbs moisture.

6. The animal toilet sand according to claim 5, wherein the covering layer of the color change particles is stained blue or green.

7. The animal toilet sand according to any one of claims 1 to 6, wherein the color change particles are white particulate in a state where moisture is not absorbed.

8. The animal toilet sand according to any one of claims 1 to 7, wherein the particulates include a deodorant.

9. The animal toilet sand according to any one of claims 1 to 8, wherein the particulates include a surfactant.

10. The animal toilet sand according to any one of claims 2 to 9, wherein the proportion of pulp included in the covering layer of the color change particles is greater than the proportion of pulp included in the core portion of the color change particles and the stained core portion.

## Patentansprüche

1. Tiertoilettensand, der aus einer Vielzahl von Partikeln besteht, die eine wasserabsorbierende Eigenschaft aufweisen,
wobei die Partikel Folgendes einschließen: Farbänderungspartikel, die zum Einschluss von Zellstoff und zur Änderung der Farbe bei Absorbierung von Feuchtigkeit konfiguriert sind; und
weiße Partikel, die Folgendes aufweisen: einen Kernteil, der zum Einschluss von Zellstoff konfiguriert ist, und eine Deckschicht, die zum Einschluss von Zellstoff, hochabsorbierendem Harz und Duftstoff und zur Abdeckung des Kernteils konfiguriert ist, wobei die weißen Partikel bei Absorbierung von Feuchtigkeit nicht die Farbe ändern,
**dadurch gekennzeichnet, dass** die Farbänderungspartikel in einem höheren Gewichtsverhältnis eingeschlossen sind als die weißen Partikel,
und
wobei eine Korngröße der Farbänderungspartikel und der weißen Partikel mindestens 3 mm und nicht größer als 8 mm beträgt und der Anteil der weißen Partikel an allen Partikeln 0,5 % bis 5 % im Gewichtsverhältnis beträgt.

2. Tiertoilettensand nach Anspruch 1, wobei: die Farbänderungspartikel mit Folgenden bereitgestellt sind: einem eingefärbten Kernteil, der in einer vorgegebenen Farbe eingefärbt ist, und einer Deckschicht, die zum Einschluss von Zellstoff und hochabsorbierendem Harz und zur Abdeckung des eingefärbten Kernteils und Maskierung der Farbe des eingefärbten Kernteils konfiguriert ist; und
die Farbe des eingefärbten Kernteils erscheint, wenn die Deckschicht der Farbänderungspartikel Feuchtigkeit absorbiert.

3. Tiertoilettensand nach Anspruch 2, wobei der eingefärbte Kernteil Abfallmaterial von absorbierenden Artikeln einschließt und die Farbe des eingefärbten Kernteils dunkler ist als die Farbe des Abfallmaterials.

4. Tiertoilettensand nach Anspruch 2 oder 3, wobei der eingefärbte Kernteil blau oder grün eingefärbt ist.

5. Tiertoilettensand nach Anspruch 1, wobei: die Farbänderungspartikel mit Folgenden bereitgestellt sind: einem Kernteil, der zum Einschluss von Zellstoff konfiguriert ist, und einer Deckschicht, die zum Einschluss eines vorgegebenen Pigments oder Farbstoffs und zur Abdeckung des Kernteils der Farbänderungspartikel konfiguriert ist; und
die Farbe des Pigments oder Farbstoffs, das/der in der Deckschicht eingeschlossen ist, erscheint, wenn die Deckschicht der Farbänderungspartikel Feuchtigkeit absorbiert.

6. Tiertoilettensand nach Anspruch 5, wobei die Deckschicht der Farbänderungspartikel blau oder grün eingefärbt ist.

7. Tiertoilettensand nach einem der Ansprüche 1 bis 6, wobei die Farbänderungspartikel weiße Partikel in einem Zustand sind, in dem keine Feuchtigkeit absorbiert ist.

8. Tiertoilettensand nach einem der Ansprüche 1 bis 7, wobei die Partikel ein Deodorant einschließen.

9. Tiertoilettensand nach einem der Ansprüche 1 bis 8, wobei die Partikel einen oberflächenaktiven Stoff einschließen.

10. Tiertoilettensand nach einem der Ansprüche 2 bis 9, wobei der Anteil an Zellstoff, der in der Deckschicht der Farbänderungspartikel eingeschlossen ist, größer ist als der Anteil an Zellstoff, der in dem Kernteil der Farbänderungspartikel und dem eingefärbten Kernteil eingeschlossen ist.

## Revendications

1. Sable de litière pour animaux composé d'une pluralité de particules ayant une propriété d'absorption d'eau,
dans lequel les particules comprennent : des particules à changement de couleur qui sont configurées pour comprendre de la pulpe et pour changer de couleur lors de l'absorption d'humidité ; et
des particules blanches qui ont une partie centrale qui est configurée pour comprendre de la pulpe et une couche de couverture qui est configurée pour comprendre de la pulpe, de la résine hautement absorbante et de la fragrance, et pour recouvrir la partie centrale, les particules blanches ne changeant pas de couleurs lors de l'absorption d'humidité,
**caractérisé en ce que** les particules à changement de couleur sont comprises selon un rapport de poids supérieur par rapport aux particules blanches, et
dans lequel une grosseur de grain des particules à changement de couleur et des particules blanches mesure au moins 3 mm et pas plus de 8 mm, et la proportion des particules blanches par rapport à toutes les particules est de 0,5 % à 5 % en rapport de poids.

2. Sable de litière pour animaux selon la revendication 1, dans lequel : les particules à changement de couleur comportent une partie centrale colorée qui est colorée en une couleur prédéterminée, et une couche de couverture qui est configurée pour comprendre de la pulpe et de la résine hautement absorbante et pour recouvrir la partie centrale colorée et masquer la couleur de la partie centrale colorée ; et
la couleur de la partie centrale colorée sort quand la couche de couverture des particules à changement de couleur absorbe de l'humidité.

3. Sable de litière pour animaux selon la revendication 2, dans lequel la partie centrale colorée comprend des déchets d'articles absorbants et la couleur de la partie centrale colorée est plus sombre par rapport à la couleur des déchets.

4. Sable de litière pour animaux selon la revendication 2 ou la revendication 3, dans lequel la partie centrale colorée est colorée en bleu ou en vert.

5. Sable de litière pour animaux selon la revendication 1, dans lequel : les particules à changement de couleur comportent une partie centrale qui est configurée pour comprendre de la pulpe, et une couche de couverture qui est configurée pour comprendre un pigment ou colorant prédéterminé et pour recouvrir la partie centrale des particules à changement de couleur ; et
la couleur du pigment ou colorant compris dans la couche de couverture sort quand la couche de couverture des particules à changement de couleur absorbe de l'humidité.

6. Sable de litière pour animaux selon la revendication 5, dans lequel la couche de couverture des particules à changement de couleur est colorée en bleu ou en vert.

7. Sable de litière pour animaux selon l'une quelconque des revendications 1 à 6, dans lequel les particules à changement de couleur sont des particules blanches dans un état dans lequel aucune humidité n'est absorbée.

8. Sable de litière pour animaux selon l'une quelconque des revendications 1 à 7, dans lequel les particules comprennent un déodorant.

9. Sable de litière pour animaux selon l'une quelconque des revendications 1 à 8, dans lequel les particules comprennent un agent de surface.

10. Sable de litière pour animaux selon l'une quelconque des revendications 2 à 9, dans lequel la proportion de pulpe comprise dans la couche de couverture des particules à changement de couleur est supérieure par rapport à la proportion de pulpe comprise dans la partie centrale des particules à changement de couleur et la partie centrale colorée.
